# EUROPÄISCHE PATENTSCHRIFT

(11) **EP 1 136 495 B1**
(45) Veröffentlichungstag und Bekanntmachung des Hinweises auf die Patenterteilung: **28.06.2006**
(21) Anmeldenummer: 01101871.0
(22) Anmeldetag: 26.01.2001
(51) Int. Cl.: C07F 7/18

(54) **1:1-Monoaddukte aus sekundären Aminoalkylalkoxysilanen und Diisocyanaten sowie ein Verfahren zu ihrer Herstellung**
1:1 monoadducts of aminoalkylalkoxysilanes and diisocyanates, their preparation and use
1:1 Monoadducts d'aminoalkylalkoxysilanes et diisocyanates, leur préparation et utilisation

(30) Priorität: 18.03.2000 DE 10013628
(43) Veröffentlichungstag der Anmeldung: 26.09.2001
(73) Patentinhaber: Degussa AG, 40474 Düsseldorf (DE)
(72) Erfinder: Kohlstruk, Stephan, Dr., 45770 Marl (DE); Windmüller, Manuela, 45768 Marl (DE)

(56) Entgegenhaltungen:
- EP-A- 1 013 685
- DE-A- 3 220 865

## Beschreibung

Die Erfindung betrifft 1:1-Monoaddukte aus sekundären Aminoalkylalkoxysilanen und Diisocyanaten mit einem Gehalt an freiem Diisocyanat von unter 0,6 Gew.-%. sowie ein Verfahren zu ihrer Herstellung. Bei den Monoaddukten handelt es sich um harnstoffgruppenhaltige difunktionelle Monomere mit einer reaktiven Isocyanat-Funktion und vernetzbarem Silizium.

Die Monoaddukte aus Aminoalkylalkoxysilanen und Diisocyanaten gehören zur Klasse der Isocyanatoorganosilane. Zur Herstellung von Isocyanatoorganosilanen sind eine Reihe von Verfahren entwickelt worden, die sich z.B. hinsichtlich Wirtschaftlichkeit, Effizienz, Ausbeute sowie den notwendigen technischen Voraussetzungen unterscheiden (vgl. EP 0 649 850). Das erfindungsgemäße Verfahren eignet sich sowohl zur Herstellung von Labormenge als auch zur Produktion im technischen Maßstab.

Isocyanatoorganosilane sind aufgrund ihrer Difunktionalität vielseitig einsetzbare Synthesebausteine, die die hohe Oberflächenaktivität der Siloxane mit der hohen Reaktivität der Isocyanate kombinieren und der Verknüpfung konventioneller Polymerchemie mit der Silikonchemie dienstbar gemacht werden können. Die hydrolysierbare Silylgruppe kann in Gegenwart von Feuchtigkeit über eine "Silanpolykondensation" vernetzen, und auch die Isocyanatgruppen können unter Feuchtigkeitseinfluß miteinander kombinieren. Über die Reaktion mit hydroxyfunktionellen Reaktionspartnern hinaus bietet die Isocyanatgruppe zusätzlich die Option der NCO/NH-Reaktion. Beide Funktionalitäten ermöglichen prinzipiell eine chemischen Anbindung des Bausteins an übliche Polymermaterialien und damit eine maßgeschneiderte Modifikation derselben.

Die Patentliteratur beschreibt feuchtigkeitshärtende Dichtungsmassen auf Basis von ganz oder teilweise silanverkappten Isocyanat-terminierten Polyurethanpräpolymeren (EP 0 355 426, EP 0 082 528, DE 27 38 979, DE 34 26 987, EP 0 158 893, USP 4,374,237). Monoaddukte aus Aminoalkylalkoxysilanen und Diisocyanaten ließen sich zur Herstellung solcher Systeme einsetzen. Sie finden auch Anwendung im Bereich vernetzbarer Klebstoffe (DE 32 20 865, DE 32 22 860). Die EP 0 182 924 beschreibt die Herstellung und Verwendung von haftvermittelnden Beschichtungen aus Poly(meth)acrylaten und Alkoxysilanen mit Isocyanat-Funktion, und die EP 0 268 559 beschreibt siliziummodifizierte Isophoronisocyanate als Haftvermittler. Grundsätzlich kommen auch harnstoffgruppenhaltige siliziummodifizierte Isocyanate für eine solche Anwendung in Frage.

In der EP-A-1013 685 werden NCO-freie Addukte beschrieben.

1:1-Addukte aus Diisocyanaten und Aminoalkylalkoxysilanen sind nicht unbekannt (vgl. z.B. DE 32 20 865). Ihre Herstellungsweise - Umsetzung der beiden Komponenten in einem Molverhältnis von ca. 1:1 - hat aber zwangsläufig zur Folge, daß sie nicht in reiner, isolierter Form, sondern nur im Gemisch mit größeren Mengen an Bisaddukt (Diisocyanat-Aminoalkylsilan 1:2) und nicht abreagiertem Diisocyanat anfallen. Ersteres ist als Disilanverbindung im Gegensatz zum 1:1-Addukt kein difunktioneller Baustein mit unabhängig voneinander reaktionsfähigen chemischen Funktionen mehr. Es mindert die Qualität des Monoadduktes und bleibt gegebenenfalls auch nicht ohne nachteilige Auswirkungen auf die Qualität und das Eigenschaftsbild der angestrebten Endprodukte. Ein hoher Anteil an monomerem Diisocyanat ist aus toxikologischer Sicht intolerabel. Isocyanate sind sehr reaktionsfähige Verbindungen und viele Vertreter dieser Klasse sind als toxisch eingestuft. Ein hoher Restanteil an monomerem Diisocyanat im Produkt ist unbedingt zu vermeiden, da die Aufnahme von Isocyanaten überwiegend über die Atemwege erfolgt und der Dampfdruck des Monomers ungleich höher ist als beim 1:1-Addukt.

Es ist bekannt, daß primäre Aminoalkylsilane zur partiellen Endverkappung von NCO-Prepolymeren nicht geeignet sind, weil die freien Isocyanatgruppen unter

Biuretbildung mit den Harnstoffgruppen der verkappten Termini weiter abreagieren. Die Folge ist Gelbildung. Im Gegensatz zur Lehre der USP 3,627,722 und USP 4,067,844 ist das Vergelungsproblem nach Aussage der USP 4,374,237 auch durch Einsatz gewöhnlicher sekundärer Aminoalkylsilane anstelle von primären Aminoalkylsilanen nicht lösbar. Als überraschende Ausnahme wird eine Gruppe spezieller sekundärer Aminoalkylsilane genannt, unter ihnen als geeigneter Vertreter N,N-Bis[(3-triethoxysilyl)propyl]amin.

Darüber hinaus haben eigene Versuche gezeigt, daß NCO-Gruppen enthaltende Addukte aus Isocyanaten und Aminoalkylalkoxysilanen nicht nur mit dem Problem der Vergelung durch Biuretbildung behaftet sind, sondern zudem eine deutliche Instabilität in bezug auf eine Rückspaltung in die Ausgangsstoffe besteht. Diese Neigung zur Umkehrung der Bildungsreaktion - die Harnstoffgruppe zerfällt unter Rückbildung der Isocyanatgruppe und des Amins - wurde für primäre und sekundäre Aminoalkylsilane, einschließlich N,N-Bis[(3-triethoxysilyl)propyl]amin, beobachtet.

Die Aufgabe der Erfindung bestand in der Auffindung und Herstellung vergelungs-und rückspaltstabiler Monoaddukte (1:1) aus Aminoalkylalkoxysilanen und Diisocyanaten mit einem geringeren Gehalt an freiem Diisocyanat.

Es wäre vorteilhaft und wünschenswert, wenn die angestrebten Monoaddukte (1:1) aus Aminoalkylalkoxysilanen und Diisocyanaten nicht die angeführten Nachteile aufweisen würde.

Überraschenderweise ließen sich monomerarme stabile Monoaddukte (1:1) aus Aminoalkylalkoxysilanen und Diisocyanaten erhalten, wenn spezielle sekundäre Aminoalkylalkoxysilane mit Diisocyanaten umgesetzt wurden und eine anschließende Monomerenabtrennung durch Kurzwegdestillation durchgeführt wurde.

Gegenstand der Erfindung sind 1.1-Monoaddukte mit einem Gehalt an freiem NCO von 5-9 Gew.-% aus Aminoalkylalkoxysilanen und Düsocyanaten mit einem Gehalt an freiem Diisocyanat von weniger als 0,6 Gew.-%, wobei diese sekundäre Aminoalkylalkoxysilane der Formel I 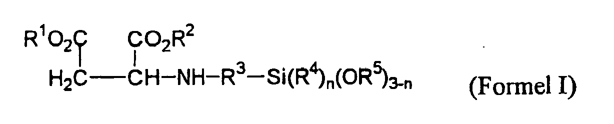 wobei die Substituenten die folgende Bedeutung haben:
R¹, R² = gleiche oder verschiedene C₁-C₈-Alkylgruppen;
R³ = C₁-C₅-Alkylengruppe;
R⁴, R⁵ = gleiche oder verschiedene C₁-C₁₈-Alkylgruppen oder Alkoxyalkylengruppen mit bis zu 5 Kohlenstoffatomen;
n = 0,1,2;
und Diisocyanate enthalten.

Gegenstand der vorliegenden Erfindung ist auch ein Verfahren zur Herstellung von 1:1-Monoaddukten mit einem Gehalt an freiem NCO von 5-9 Gew.-% aus Aminoalkylalkoxysilanen und Diisocyanaten mit einem Gehalt an freiem Diisocyanat von unter 0.6 Gew.-%, das dadurch gekennzeichnet ist, dass 5-20 mol Diisocyanat mit 1 mol Aminoalkylalkoxysilan umgesetzt werden, wobei das Diisocyanat bei Raumtemperatur vorgelegt wird und die tropfenweise Zugabe des Aminoalkylalkoxysilans so erfolgt, daß der Temperaturanstieg 100°C nicht überschreitet, und nach Beendigung der Reaktion das nicht umgesetzte Diisocyanat durch eine Kurzwegdestillation bei 80-160/0.04-0.2 mbar vom Reaktionsprodukt abgetrennt wird.

Erfindungsgemäße sekundäre Aminoalkylalkoxysilane sind solche der Formel I 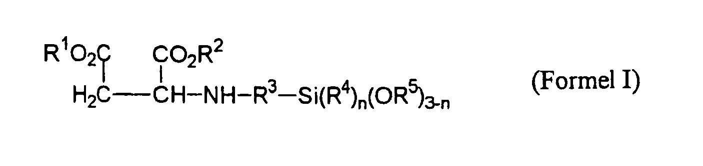 wobei die Substituenten die folgende Bedeutung haben:
R¹, R² = gleiche oder verschiedene C₁-C₈-Alkyl, bevorzugt C₁-C₄-Alkyl;
R³ = C₁-C₅-Alkylengruppen,
R⁴, R⁵ = gleiche oder verschiedene C₁-C₁₈-Alkylgruppen oder Alkoxyalkylengruppen mit bis zu 5 Kohlenstoffatomen,
n = 0,1,2.

Diese Verbindungen werden in der EP 596 360 beschrieben. Sie sind nicht Gegenstand der Erfindung. Ihre Herstellung erfolgt durch Michael-Addition von primären Aminoalkoxysilanen der Formel II

H₂N―R³―Si(R⁴)ₙ(OR⁵)₃₋ₙ (Formel II)

an Malein- und/oder Fumarsäureestern der Formel III

R¹ O₂C-CH=CH-CO₂R² (Formel III)

Geeignete primäre Aminoalkoxysilane der Formel II sind beispielsweise 3-Aminopropyltrimethoxysilan (z.B. DYNASYLAN AMMO), 3-Aminopropyltriethoxysilan (z.B. DYNASYLAN AMEO), 3-Aminopropyl-methyldiethoxysilan (z.B. DYNASYLAN 1505) und 3-Aminopropyl-ethylenglykoloxymethoxysilan (z.B. DYNASYLAN 1302). Besonders bevorzugt sind 3-Aminopropyltrimethoxysilan und 3-Aminopropyltriethoxysilan.

Als Isocyanate eignen sich aliphatische, cycloaliphatische und araliphatische, d.h. arylsubstituierte aliphatische Diisocyanate und (cyclo)aliphatische Diisocyanate, wie sie beispielsweise im Houben-Weyl, Methoden der organischen Chemie, Band 14/2, Seite 61-70 und im Artikel von W. Siefken, Justus Liebigs Annalen der Chemie **562** 75-136, beschrieben werden. Beispiele sind 1,2-Ethylendiisocyanat, 1,4-Tetramethylendiisocyanat, 1,6-Hexamethylendiisocyanat (HDI), 2,2,4- bzw. 2,4,4-Trimethyl-1,6-hexamethylendiisocyanat (TMDI), 1,9-Diisocyanato-5-methylnonan, 1,8-Diisocyanato-2,4-dimethyloctan, 1, 12-Dodecandiisocyanat, ω,ω'-Diisocyanatodipropylether, Cyclobuten-1,3-diisocyanat, Cyclohexan-1,3- und 1,4-diisocyanat, 3-Isocyanatomethyl-3,5,5-trimethyl-cyclohexylisocyanat (Isophorondiisocyanat (IPDI)), 1,4-Diisocyanatomethyl-2,3,5,6-tetramethyl-cyclohexan, Decahydro-8-methyl-(1,4-methanol-naphthalin-2 (oder 3) 5-ylendimethylendiisocyanat, Hexahydro-4,7-methano-indan-1 (oder 2) 5 (oder 6) ylendimethylendiisocyanat, Hexahydro-4,7-methano-indan-1 (oder 2) 5 (oder 6) ylendiisocyanat, 2,4- und 2,6-Hexahydrotoluylendiisocyanat, Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexyl-methan, 4,4'-Diisocyanato-2,2',3,3',5,5',6,6'-octamethyldicyclohexylmethan, ω,ω'-Diisocyanato-1,4-diethylbenzol, 1,4-Diisocyanatomethyl-2,3,5,6-tetramethylbenzol, 2-Methyl-1,5-diisocyanatopentan (MPDI), 2-Ethyl-1,4-diisocyanatobutan, 1,10-Diisocyanatodecan, 1,5-Diisocyanato-hexan. Weitere geeignete Isocyanate werden in dem genannten Artikel in den Annalen auf Seite 122 f beschrieben. Bevorzugt werden in der Regel die folgenden Diisocyanate sowie deren Isomerengemische, d. h. HDI, MPDI, 2,5(2,6)-Bis(isocyanatomethyl)bicyclo[2.2.1]heptan (NBDI), H₁₂MDI, TMDI und IPDI, besonders bevorzugt H₁₂MDI und IPDI, allein oder in Mischungen, eingesetzt.

Der Gehalt der erfindungsgemäßen Monoaddukte an freiem NCO beträgt 5 bis 9 Gew.-%. Der Restanteil an monomerem Diisocyanat liegt unter 0.6 Gew.-%. Die Viskosität bei Raumtemperatur variiert in einem weiten Bereich von 200 bis 20000 mPas.

Das Molverhältnis von Diisocyanat und Aminoalkylalkoxysilan hängt davon ab, welcher Gehalt an Bisaddukt (Diisocyanat-Aminoalkoxysilan 1:2) zugelassen werden darf. Je höher der Überschuß an Diisocyanat, desto weniger 1:2-Addukt wird sich im Reaktionsverlauf bilden.

Die Kurzwegdestillation wird bei 80-160°C/0.04-0.2mbar durchgeführt. Die Temperatur und der Unterdruck richten sich nach dem Viskositätsverhalten und der thermischen Belastbarkeit des jeweiligen Produkts. Insbesondere bei Einsatz von sterisch wenig anspruchsvollen Diisocyanaten, wie z.B. HDI, kann es bei erhöhten Temperaturen bei der Kurzwegverdampfung zu einer partiellen Abspaltung von Alkohol kommen.

Die Lagerstabilität der erfindungsgemäßen Monoaddukte in bezug auf Vergelung und Rückspaltung ist vornehmlich eine Funktion des eingesetzten Diisocyanates. Vergelung äußert sich in einer Abnahme des NCO-Gehaltes und einer Zunahme der Viskosität, Rückspaltung als Zunahme der Gehaltes an monomerem Diisocyanat. Die Lagerstabilität der erfindungsgemäßen Monoaddukte ist am besten, wenn IPDI als Diisocyanat-Komponente eingesetzt wurde.

Die erfindungsgemäßen Monoaddukte finden Verwendung als Baustein zur gezielten Modifikation von Polymeren sowie in PUR-Lacksystemen und PUR-Dispersionen.

### Beispiele 1 bis 3 und Vergleichsbeispiele I-II

### Allgemeine Herstellungsvorschrift

Eine intensiv gerührte Mischung aus 5 bis 20 Molen Diisocyanat wird vorsichtig tropfenweise mit 1 Mol Aminoalkylalkoxysilan versetzt, so daß die Temperatur der Reaktionsmischung 100°C nicht überschreitet. Die Umsetzung wird unter Inertgasatmosphäre durchgeführt. Nach Beendigung der Reaktion wird das nicht umgesetzte Diisocyanat mittels Kurzwegdestillation bei 80-160°C und 0.04-0.2 mbar abgetrennt.

Die Monoaddukte werden als Rückstand erhalten. Die ermittelten chemischen und physikalischen Kenndaten können Tabelle 1 entnommen werden.

**Tab. 1: Monoaddukte (1:1) aus Diisocyanaten und sek. Aminoalkylalkoxysilanen**

| Biespiel | Diisocyanat | Aminoalkyl-alkoxysilan | NCO-Gehalt (theor.) [Gew.-%] | NCO-Gehalt (gef.) [Gew. %] | Monomergehalt [Gew.-%] |
|---|---|---|---|---|---|
| 1 | HDI | A | 6.8 | 7.0 | 0.1 |
| 2 | H₁₂MDI | A | 5.9 | 6.0 | 0.5 |
| 3 | IPDI | A | 6.3 | 6.4 | 0.2 |
| I | HDI | B | 11.6 | 10.0 | 1.4 |
| II | IPDI | B | 10.1 | 8.4 | 2.3 |
| III | IPDI | C | 6.5 | 5.0 | 1.5 |

| | | | | | |
|---|---|---|---|---|---|
| A: Muchael-Addukt gemäß Formel 1 aus DYNASYLAN AMEO und Dibutylmaleinat | | | | | |
| B: DYNASYLAN 1110 (N-Methyl-3-aminopropyltrimethoxysilan | | | | | |
| C: N,N-Bis[(3-triethoxysilyl)propyl]amin | | | | | |

Es zeigt sich, daß die nicht erfindungsgemäßen Verbindungen der Vergleichsbeispiele A-C (Tab. 1) - eine nur mangelhafte Stabilität in bezug auf Vergelung und Rückspaltung aufweisen. Indikatoren sind die hohen Monomergehalte sowie die vom theoretischen Wert stark nach unten abweichenden NCO-Gehalte dieser Verbindungen. Lagerstabilitätsstudien enthüllen die vergleichsweise mangelhafte Rückspaltstabilität der nicht erfindungsgemäßen Verbindungen besonders deutlich. Die Monomergehalte steigen innerhalb kurzer Zeit sprunghaft auf hohe Werte an (Tab. 2).

**Tab.2:Lagerstabilität von Monoaddukten (1:1) aus Diisocyanaten und sek. Aminoalkylalkoxysilanen**

| Biespiel | 1.1-Addukt | | Start | 4 Wochen | 8 Wochen | 12 Wochen |
|---|---|---|---|---|---|---|
| 1 | HDI+A | NCO-Gehalt [Gew.-%] | 7.0 | 6.9 | 6.3 | 5.8 |
| | | Monomer [Gew.-%] | 0.1 | 0.2 | 0.2 | 0.2 |
| | | Visk. bei 23°C [mPas] | 320 | 340 | 380 | 430 |
| 2 | H12MDI + A | NCO-Gehalt [Gew.-%] | 6.0 | 6.1 | 6.0 | 5.8 |
| | | Monomer [Gew.-%] | 0.5 | 0.5 | 0.5 | 0.4 |
| | | Visk. bei 23°C [mPas] | 7560 | 7940 | 8380 | --- |
| 3 | IPDI+A | NCO-Gehalt [Gew.-%] | 6.4 | 6.4 | 6.2 | 6.3 |
| | | Monomer [Gew.-%] | 0.2 | 0.2 | 0.2 | 0.2 |
| | | visk. bei 23°C [mPas] | 5800 | 6100 | 6320 | 6410 |
| I | HDI + B | NCO-Gehalt [Gew.-%] | 10.0 | 9.9 | 9.4 | 9.3 |
| | | Monomer [Gew.-%] | 1.4 | 6.3 | 7.3 | 7.7 |
| | | Visk. bei 23°C [mPas] | 290 | 400 | 510 | --- |
| II | IPDI + B | NCO-Gehalt [Gew.-%] | 8.4 | 8.1 | 8.1 | 8.0 |
| | | Monomer [Gew.-%] | 2.3 | 5.5 | 5.5 | 5.4 |
| | | Visk. bei 23°C [mPas] | 60500 | 62800 | 71300 | 74800 |
| III | IPDI + C | NCO-Gehalt [Gew.-%] | 5.0 | 4.7 | 4.6 | 4.4 |
| | | Monomer [Gew.-%] | 1.5 | 4.8 | 4.9 | 4.9 |
| | | Visk. bei 23°C [mPas] | 2500 | 2780 | 3120 | --- |

| | | | | | | |
|---|---|---|---|---|---|---|
| A: Michael-Addukt gemäß Formel I aus DYNASYLAN AMEO und Dibutylmaleinat | | | | | | |
| B: DYNASYLAN 1110 (N-Methyl-3-aminopropyltrimethoxysilan | | | | | | |
| C: N,N-Bis[(3-triethoxysilyl)propyl]amin | | | | | | |

## Patentansprüche

1. 1:1-Monoaddukte mit einem Gehalt an freiem NCO von 5-9 Gew.-% aus Aminoalkylalkoxysilanen und Diisocyanaten mit einem Gehalt an freiem Diisocyanat von weniger als 0,6 Gew.-%,
**dadurch gekennzeichnet,**
**dass** sekundäre Aminoalkylalkoxysilane der Formel I 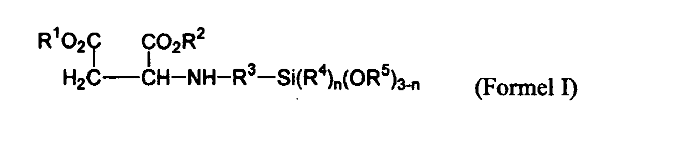 wobei die Substituenten die folgende Bedeutung haben:
R¹, R² = gleiche oder verschiedene C₁-C₈-Alkylgruppen;
R³ = C₁-C₅-Alkylengruppe;
R⁴, R⁵ =gleiche oder verschiedene C₁-C₁₈-Akylgruppen oder Alkoxyalkylengruppen mit bis zu 5 Kohlenstoffatomen;
n = 0,1,2;
und Diisocyanate enthalten sind.

2. Monoaddukte nach Anspruch 1,
**dadurch gekennzeichnet,**
**dass** aliphatische, cycloaliphatische, araliphatische Diisocyanate all ein oder in Mischungen enthalten sind, ausgewaht aus 1,2-Ethylendüsocyanat, 1,4-Tetramethylendiisocyanat, 1,6-Hexamethylendiisocyanat (HDI), 2,2,4- bzw. 2,4,4-Trimethyl-1,6-hexamethylendiisocyanat (TMDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisoeyanat, Cyclohexan-1,3- und 1,4-diisocyanate, 3-Isocyanatomethyl-3,5,5-trimethyl-cyclohexylisocyanat (Isophorondiisocyanat (IPDI)), 1,4-Diisocyanatomethyl-2,3,5,6-tetramethylcyclohexan, Decahydro-8-methyl-(1,4-methanol-naphthalin-2 (oder 3) 5-ylendimethylendiisocyanat, Hexahydro-4,7-methano-indan-1 (oder 2) 5 (oder 6) ylendimethytendiisocyanat, Hexahydro-4,7-methano-indan-1 (oder 2) 5 (oder 6) ylendiisocyanat, 2,4- und 2,6-Hexahydrotoluylendiisocyanat, Perhydro-2,4'-diphenylmethandiisocyanat, Perhydro-4,4'-diphenyhnethandiisocyanat (H₁₂MDI), 4,4'-Diisocyanato-3,3',5,5'-tetramethyldicyclohexyl-methan, 4,4'-Diisocyanato-2,2',3,3',5,5',6,6'-octamethyldicyclohexylinethan, ω,ω'-Diisocyanato-1,4-diethylbenzol, 1,4-Diisocyanatomethyl-2,3,5,6-tetramethylbenzol, 2-Methyl-1,5-diisocyanatopentan (MPDI), 2-Ethyl-1,4-diisocyanatobutan, 1,10-Diisocyanatodecan, 1,5-Diisocyanato-hexan.

3. Monoaddukte nach einem der Ansprüche 1-2,
**dadurch gekennzeichnet,**
**dass** als Diisocyanate Isophorondiisocyanat (IPDI) und/oder 4,4'-Methylen-bis (cyclohexylisocyanat) (H₁₂MDI) enthalten sind.

4. Monoaddukt nach mindestens einem der Ansprüche 1-3,
**dadurch gekennzeichnet,**
**dass** als Aminoalkylalkoxysilane Michael-Additionsprodukte aus Maleinsäureestern und 3-Aminopropyltrimethoxysilan enthalten sind.

5. Monoaddukte nach mindestens einem der Ansprüche 1-4,
**dadurch gekennzeichnet,**
**dass** als Aminoalkylalkoxysilane Michael-Additionsprodukte aus Maleinsäureestern und 3-Aminopropyltriethoxysilan enthalten sind.

6. Monoaddukte nach mindestens einem der Ansprüche 1-5,
**dadurch gekennzeichnet,**
**dass** als Aminoalkylalkoxysilane Michael-Additionsprodukte aus Fumarsäureestern und 3-Aminopropyltrimethoxysilan enthalten sind.

7. Monoaddukte nach mindestens einem der Ansprüche 1-6,
**dadurch gekennzeichnet,**
**dass** als Aminoalkylalkoxysilane Michael-Additionsprodukte aus Fumarsäureestern und 3-Aminopropyltriethoxysilan enthalten sind.

8. Verfahren zur Herstellung von 1:1-Monoaddukten mit einem Gehalt an freiem NCO von 5-9 Gew.-% aus Aminoalkylalkoxysilanen und Diisocyanaten mit einem Gehalt an freiem Diisocyanat von weniger als 0,6 Gew.-% nach einem der Ansprüche 1-7,
**dadurch gekennzeichnet,**
**dass** 5-20 mol Düsocyanat mit 1 mol Aminoalkylalkoxysilan umgesetzt werden, wobei das Diisocyanat bei Raumtemperatur vorgelegt wird und die tropfenweise Zugabe des Aminoalkylalkoxysilans so erfolgt, daß der Temperaturanstieg 100 °C nicht überschreitet, und nach Beendigung der Reaktion das nicht umgesetzte Diisocyanat durch eine Kurzwegdestillation bei 80-160 °C und 0.04-0.2 mbar vom Reaktionsprodukt abgetrennt wird.

9. 1:1-Monoaddukte mit einem Gehalt an freiem NCO von 5-9 Gew.-% aus Aminoalkylalkoxysilanen und Diisocyanaten mit einem Gehalt an freiem Diisocyanat von weniger als 0,6 Gew.-%, erhältlich durch Umsetzung von sekundären Aminoalkylalkoxysilanen der Formel I 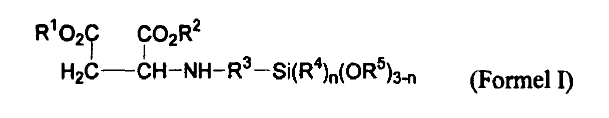 wobei die Substituenten die folgende Bedeutung haben:
R¹, R² = gleiche oder verschiedene C₁-C₈-Alkylgruppen;
R³ = C₁-C₅-Alkylengruppe;
R⁴, R⁵ = gleiche oder verschiedene C₁-C₁₈-Alkylgruppen oder Alkoxyalkylengruppen mit bis zu 5 Kohlenstoffatomen;
n = 0,1,2;
und Diisocyanaten,
**dadurch** dass 5-20 mol Düsocyanat mit 1 mol Aminoalkylalkoxysilan umgesetzt werden, wobei das Düsocyanat bei Raumtemperatur vorgelegt wird und die tropfenweise Zugabe des Aminoalkylalkoxysilans so erfolgt, daß der Temperaturanstieg 100°C nicht überschreitet, und nach Beendigung der Reaktion das nicht umgesetzte Diisocyanat durch eine Kurzwegdestillation bei 80-160 °C und 0.04-0.2 mbar vom Reaktionsprodukt abgetrennt wird.

## Claims

1. A 1:1 monoadduct, having a free NCO content of 5 - 9%, of an aminoalkylalkoxysilane and a diisocyanate having a free diisocyanate content of less than 0.6% by weight, **characterized in that** a secondary aminoalkylalkoxysilane of the formula I 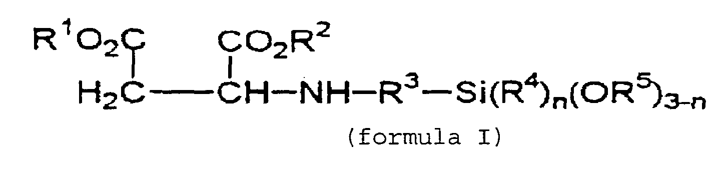 where
R¹ and R² are identical or different C₁-C₈ alkyl groups;
R³ is a C₁-C₅ alkylene group;
R⁴ and R⁵ are identical or different C₁-C₁₈ alkyl groups or alkoxyalkylene groups having up to 5 carbon atoms; and
n is 0, 1 or 2;
and a diisocyanate are present.

2. A monoadduct according to claim 1, **characterized in that** an aliphatic, cycloaliphatic, araliphatic diisocyanate is present, alone or in a mixture, selected from 1,2-ethylene diisocyanate, 1,4-tetramethylene diisocyanate, 1,6-hexamethylene diisocyanate (HDI), 2,2,4- and 2,4,4-trimethyl-1,6hexamithylene diisocyanate (TMDI), 1,9-diidocyanato-5-methylnonane, 1,8-diisocyanato-2,4-dimethyloctane, 1,12-dodecane diisocyanate, ω,ω'-diisocyanatodipropyl ether, cyclobutene 1,3-diisocyanate, cyclohexane 1,3- and 1,4-diisocyanate, 3-isocyanatomethyl-3,5,5-trimethylcyclohexyl isocyanate (isophorone diisocyanate (IPDI)), 1,4-diisocyanatomthyl-2,3,5,6-tetramethylcyclohexane, decahydro-8-methyl(1,4-methanonaphth-2- (or -3-) -5-ylenedimethylene diisocyanate, hexahydro-4,7-methano-indan-1- (or -2-) -5- (or -6-) ylenedimethylene diisocyanate, hexahydro-4,7-methanoindan-1- (or - 2-) -5- (or -6-) ylene diisocyanate, 2,4- and 2,6-hexahydrotolylene diisocyanate, perhydro-2,4'-diphenylmethane diisocyanate, perhydro-4,4'-diphenylmethane diisocyanate (H₁₂MDI), 4,4'diisocyanato-3,3',5,5'-tetramethyldicyclohexylmethane, 4,4'-diisocyanato-2,2',3,3',5,5',6,6'-octamethyldicyclohexylmethane, ω,ω'-diisocyanato-1,4-diethylbenzene, 1,4-diisocyanatomethyl-2,3,5,6-tetramethylbenzene, 2-methyl-1,5-diisocyanatopentane (MPDI), 2-ethyl-1,4-diisocyanatobutane, 1,10-diisocyantodecane, and 1,5-diisocyanatohexane.

3. A monoadduct according to either of claims 1 and 2, **characterized in that** isophorone diisocyanate (IPDI) and/or 4,4'-methylenebis(cyclohexyl isocyanate) (H₁₂MDI) is present as diisocyanate.

4. A monoadduct according to at least one of claims 1-3, **characterized in that** a Michael adduct of a maleic ester and 3-amino-propyltrimethoxysilane is present as aminoalkylalkoxysilane.

5. A monoadduct according to at least one of claims 1-4, **characterized in that** a Michael adduct of a maleic ester and 3-amino-propyltriethoxysilane is present as aminoalkylalkoxysilane.

6. A monoadduct according to at least one of claims 1-5, **characterized in that** a Michael adduct of a fumaric ester and 3-amino-propyltrimethoxysilane is present as aminoalkylalkoxysilane.

7. A monoadduct according to at least one of claims 1-6, **characterized in that** a Michael adduct of a fumaric ester and 3-amino-propyltriethoxysilane is present as aminoalkylalkoxysilane.

8. A process for preparing a 1:1 monoadduct, having a free NCO content of 5 - 9%, of an aminoalkylalkoxysilane and a diisocyanate having a free diisocyanate content of less than 0.6% by weight, according to any one of claims 1-7, **characterized in that** 5-20 mol of diisocyanate are reacted with 1 mol of aminoalkylalkoxysilane, the diisocyanate being introduced initially at room temperature and the aminoalkylalkoxysilane being added dropwise to this initial charge at a rate such that the temperature increase does not exceed 100°C, and, after the end of the reaction, the unreacted diisocyanate is separated off from the reaction product by means of a flash distillation at 80-160°C and 0.04-0.2 mbar.

9. A 1:1 monoadduct, having a free NCO content of 5 - 9%, of an aminoalkylalkoxysilane and a diisocyanate having a free diisocyanate content of less than 0.6% by weight, obtainable by reacting a secondary aminoalkylalkoxysilane of the formula I 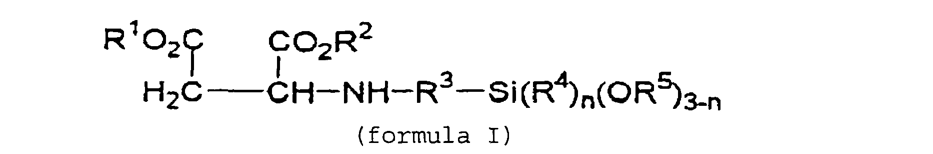 where
R¹ and R² are identical or different C₁-C₈ alkyl groups;
R³ is a C₁-C₅ alkylene group;
R⁴ and R⁵ are identical or different C₁-C₁₈ alkyl groups or alkoxyalkylene groups having up to 5 carbon atoms; and
n is 0, 1 or 2;
and a diisocyanate, by reaction of 5-20 mol of diisocyanate with 1 mol of aminoalkylalkoxysilane, the diisocyanate being introduced initially at room temperature and the aminoalkylalkoxysilane being added dropwise to this initial charge at a rate such that the temperature increase does not exceed 100°C, and, after the end of the reaction, separating off the unreacted diisocyanate from the reaction product by means of a flash distillation at 80-160°C and 0.04-0.2 mbar.

## Revendications

1. Monoadduits 1:1 ayant une teneur en NCO libre de 5 à 9 % en poids, composés d'aminoalkylalcoxysilanes et de diisocyanates, la teneur en diisocyanate libre étant de moins de 0,6 % en poids,
**caractérisés en ce qu'**
ils renferment des diisocyanates et des aminoalkylalcoxysilanes secondaires correspondant à la formule I 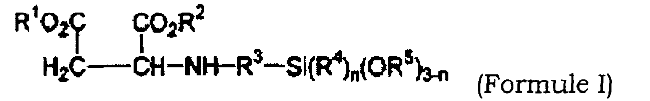 dans laquelle les substituants ont la signification suivante :
R¹, R² représentent des groupes alkyle en C₁ à C₈ identiques ou différents ;
R³ représente un groupe alkylène en C₁ à C₅;
R⁴, R⁵ représentent des groupes alkyle en C₁ à C₁₈ identiques ou différents ou des groupes alcoxyalkylène ayant jusqu'à 5 atomes de carbone ; et
n vaut 0, 1, 2.

2. Monoadduits selon la revendication 1,
**caractérisés en ce qu'**
ils renferment des diisocyanates aliphatiques, cycloaliphatiques, araliphatiques seuls ou en mélanges, choisis parmi le diisocyanate de 1,2-éthylène, le diisocyanate de 1,4-tétraméthylène, le diisocyanate de 1,6-hexaméthylène (HDI), le diisocyanate de 2,2,4- ou de 2,4,4-triméthyl-1,6 hexaméthylène (TMDI), le 1,9-diisocyanato-5-méthylnonane, le 1,8-diisocyanato-2,4-diméthyloctane, le diisocyanate de 1,12-dodécane, l'éther ω,ω'-diisocyanatodipropylique, le cyclobutène-1,3-diisocyanate, le cyclohexane-1,3- et 1,4-diisocyanate, le 3-isocyanatométhyl-3,5,5-triméthyl-cyclohexylisocyanate (diisocyanate d'isophorone (IPDI)), le 1,4-diisocyanatométhyl-2,3,5,6-tétraméthylcyclohexane, le diisocyanate de décahydro-8-méthyl-(1,4-méthanol-naphtalène-2 (ou 3) 5-ylène-diméthylène, le diisocyanate d'hexahydro-4,7-méthano-indane-1 (ou 2) 5 (ou 6) ylène-diméthylène ; le diisocyanate d'hexahydro-4,7-méthano-indane-1 (ou 2) 5 (ou 6) ylène, le diisocyanate de 2,4- et 2,6-hexahydrotoluylène, le diisocyanate de perhydro-2,4'-diphénylméthane, le diisocyanate de perhydro-4,4'-diphénylméthane (H₁₂MDI), le 4,4'-diisocyanato-3,3',5,5'-tétraméthyldicyclohexyl-méthane, le 4,4'-diisocyanato-2,2',3,3',5,5',6,6'-octaméthyldicyclohexylméthane, le ω,ω'-diisocyanato-1,4-diéthylbenzène, le 1,4-diisocyanatométhyl-2,3,5,6-tétraméthylbenzène, le 2-méthyl-1,5-diisocyanatopentane (MPDI), le 2-éthyl-1,4-diisocyanatobutane, le 1,10-diisocyanatodécane, le 1,5-diisocyanato-hexane.

3. Monoadduits selon l'une des revendications 1 et 2,
**caractérisés en ce que**
les diisocyanates renfermés sont le diisocyanate d'isophorone (IPDI) et/ou le 4,4'-méthylène-bis-(cyclohexylisocyanate) (H₁₂MDI).

4. Monoadduits selon l'une au moins des revendications 1 à 3,
**caractérisés en ce que**
les aminoalkylalcoxysilanes renfermés sont les produits d'addition de Michael issus des esters de l'acide maléique et du 3-aminopropyltriméthoxysilane.

5. Monoadduits selon l'une au moins des revendications 1 à 4,
**caractérisés en ce que**
les aminoalkylalcoxysilanes renfermés sont les produits d'addition de Michael issus des esters de l'acide maléique et du 3-aminopropyltriéthoxysilane.

6. Monoadduits selon l'une au moins des revendications 1 à 5,
**caractérisés en ce que**
les aminoalkylalcoxysilanes renfermés sont les produits d'addition de Michael issus des esters de l'acide fumarique et du 3-aminopropyltriméthoxysilane.

7. Monoadduits selon l'une au moins des revendications 1 à 6,
**caractérisés en ce que**
les aminoalkylalcoxysilanes renfermés sont les produits d'addition de Michael issus des esters de l'acide fumarique et du 3-aminopropyltriéthoxysilane.

8. Procédé de production de monoadduits 1:1 ayant une teneur en NCO libre de 5 à 9 % en poids, composés d'aminoalkylalcoxysilanes et de diisocyanates, la teneur en diisocyanate libre étant de moins de 0,6 % en poids, selon l'une des revendications 1 à 7,
**caractérisé en ce qu'**
on fait réagir de 5 à 20 mol de diisocyanate avec 1 mol d'aminoalkylalcoxysilane, le diisocyanate étant introduit à température ambiante et l'apport goutte à goutte de l'aminoalkylalcoxysilane se produisant de telle manière que l'augmentation de température ne dépasse pas 100°C, et, une fois la réaction terminée, on sépare le diisocyanate n'ayant pas réagi du produit réactionnel par distillation à court trajet entre 80 et 160°C et sous 0,04 à 0,2 mbar.

9. Monoadduits 1:1 ayant une teneur en NCO libre de 5 à 9 % en poids, composés d'aminoalkylalcoxysilanes et de diisocyanates, la teneur en diisocyanate libre étant de moins de 0,6 % en poids, obtenus par réaction de diisocyanates et d'aminoalkylalcoxysilanes secondaires correspondant à la formule I 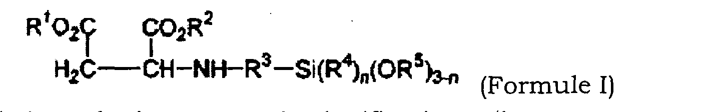 dans laquelle les substituants ont la signification suivante :
R¹, R² représentent des groupes alkyle en C₁ à C₈ identiques ou différents ;
R³ représente un groupe alkylène en C₁ à C₅ ;
R⁴, R⁵ représentent des groupes alkyle en C₁ à C₁₈ identiques ou différents ou des groupes alcoxyalkylène ayant jusqu'à 5 atomes de carbone ; et
n vaut 0, 1, 2 ;
en faisant réagir de 5 à 20 mol de diisocyanate avec 1 mol d'aminoalkylalcoxysilane, le diisocyanate étant introduit à température ambiante et l'apport goutte à goutte de l'aminoalkylalcoxysilane se produisant de telle manière que l'augmentation de température ne dépasse pas 100°C, et, une fois la réaction terminée, en séparant le diisocyanate n'ayant pas réagi du produit réactionnel par distillation à court trajet entre 80 et 160°C et sous 0,04 à 0,2 mbar.
